# FASCICULE DE BREVET EUROPEEN

(11) **EP 3 280 564 B1**
(45) Date de publication et mention de la délivrance du brevet: **30.01.2019**
(21) Numéro de dépôt: 16714862.6
(22) Date de dépôt: 04.04.2016
(51) Int. Cl.: B23P 19/02, G01K 1/14

(54) **ENSEMBLE D'INSERTION D'UN THERMOCOUPLE DANS UN CONDUIT TUBULAIRE ET PROCÉDÉ CORRESPONDANT**
ANORDNUNG ZUM EINSATZ EINES THERMOELEMENTS IN EINE ROHRFÖRMIGE LEITUNG UND VERFAHREN HIERZU
ASSEMBLY FOR INSERTING A THERMOCOUPLE INTO A TUBULAR PIPE AND CORRESPONDING METHOD

(30) Priorité: 08.04.2015 FR 1553016
(43) Date de publication de la demande: 14.02.2018
(73) Titulaire: FRAMATOME, 92400 Courbevoie (FR)
(72) Inventeur: CAHOUET, Laurent, 71150 Chaudenay (FR); PARIZE, Christophe, 71640 Jambles (FR); SCALVINI, Alain, 71370 Ouroux Sur Saone (FR)
(74) Mandataire: Lavoix
(86) Numéro de dépôt international: PCT/EP2016/057338
(87) Numéro de publication internationale: WO 2016/162303

(56) Documents cités:
- FR-A1- 2 637 527
- JP-A- H07 294 341
- US-A- 3 090 233
- US-A- 4 595 300
- US-B1- 8 485 010

## Description

L'invention concerne en générale l'insertion des thermocouples dans des conduits tubulaires.

Plus précisément, l'invention concerne selon un premier aspect un ensemble d'insertion d'un thermocouple dans un conduit tubulaire, du type comprenant :
- un châssis, ayant un passage longitudinal pour le thermocouple ;
- un dispositif de blocage du conduit en position par rapport au châssis ;
- un dispositif de guidage du thermocouple le long du passage jusqu'à une ouverture à l'extrémité du conduit ;
- un dispositif d'entraînement du thermocouple longitudinalement le long du passage par rapport au châssis.

US 8 485 010 décrit un tel ensemble d'insertion. Le dispositif d'entrainement comprend deux paires de galets, les galets de chaque paire pinçant entre eux le thermocouple. Un tel ensemble présente le défaut de marquer le thermocouple, du fait de la pression exercée par les galets.

Dans ce contexte, l'invention vise à proposer un ensemble qui ne marque pas le thermocouple.

A cette fin, l'invention porte sur un ensemble du type précité, caractérisé en ce que le dispositif d'entraînement comprend au moins une première courroie d'entraînement ayant un premier tronçon longitudinal plaqué contre le thermocouple, et un organe moteur entraînant ledit premier tronçon de la première courroie longitudinalement par rapport au châssis.

Des modes de réalisation préférés sont décrits dans les revendications dépendantes.

L'utilisation d'une courroie en lieu et place de galets permet d'augmenter la surface de contact avec le thermocouple. Ceci permet d'avoir une force de pincement plus élevée, sans marquer la surface externe du thermocouple. L'invention permet par ailleurs de vaincre des résistances à l'avancement du thermocouple beaucoup plus élevées que dans US 8 485 010.

L'ensemble peut également présenter une ou plusieurs des caractéristiques ci-dessous:
- le dispositif d'entraînement comprend une seconde courroie d'entraînement ayant un second tronçon longitudinal plaqué contre le thermocouple, l'organe moteur entraînant ledit second tronçon de la seconde courroie longitudinalement par rapport au châssis, les premier et second tronçons étant disposés transversalement de part et d'autre du thermocouple et pinçant le thermocouple entre eux ;
- le dispositif d'entraînement comprend pour chacune des première et seconde courroies, une poulie motrice et une poulie suiveuse écartées longitudinalement l'une de l'autre, les première et seconde courroies étant chacune tendues autour des deux poulies correspondantes et circulant chacune autour des deux poulies correspondantes ;
- le dispositif d'entraînement comprend, pour chacune des première et seconde courroies, un pignon et une chaîne cinématique d'entrainement de la poulie motrice correspondante par le pignon, les pignons engrenant l'un avec l'autre ;
- le dispositif d'entraînement comprend, pour chacune des première et seconde courroies, un patin de courroie disposé entre la poulie motrice et la poulie suiveuse, agencé de manière à solliciter transversalement la première ou la seconde courroie contre le thermocouple ;
- le châssis comprend deux demi-châssis portant respectivement les première et seconde courroies, les deux demi-châssis étant déplaçables l'un par rapport à l'autre transversalement, entre une position d'utilisation dans laquelle les première et seconde courroies pincent transversalement entre elles le thermocouple, et une position de repos dans laquelle les première et seconde courroies sont relativement plus écartées l'une de l'autre que dans la position d'utilisation et permettent la mise en place du thermocouple entre les première et seconde courroies ;
- l'ensemble comprend des organes de guidage, guidant les deux demi-châssis selon un mouvement de translation entre la position de repos et la position d'utilisation ;
- l'ensemble comprend un dispositif de serrage pour solliciter les deux demi-châssis) l'un contre l'autre en position d'utilisation ;
- le dispositif de blocage du conduit en position par rapport au châssis comprend deux patins de serrage portés chacun par un demi-châssis, adaptés pour pincer entre eux le conduit en position d'utilisation des demi-châssis et pour libérer le conduit par rapport au châssis en position de repos des demi-châssis ; et
- le dispositif de guidage du thermocouple le long du passage comprend au moins deux patins de centrage portés chacun par un demi-châssis, adaptés pour centrer le thermocouple par rapport au passage dans un plan perpendiculaire à la direction longitudinale en position d'utilisation des demi-châssis et pour permettre la mise en place du thermocouple dans le passage en position de repos des demi-châssis.

Selon un second aspect, l'invention concerne un procédé d'insertion d'un thermocouple dans un conduit tubulaire à l'aide d'un ensemble ayant les caractéristiques ci-dessus :
- placer les demi-châssis en position de repos ;
- mettre en place le thermocouple et le conduit par rapport aux demi-châssis ;
- placer les demi-châssis en position d'utilisation ;
- activer l'organe moteur.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue en coupe de l'ensemble d'insertion de l'invention, considérée suivant l'incidence des flèches I de la figure 2 ;
- la figure 2 est une vue de face de l'ensemble de la figure 1,

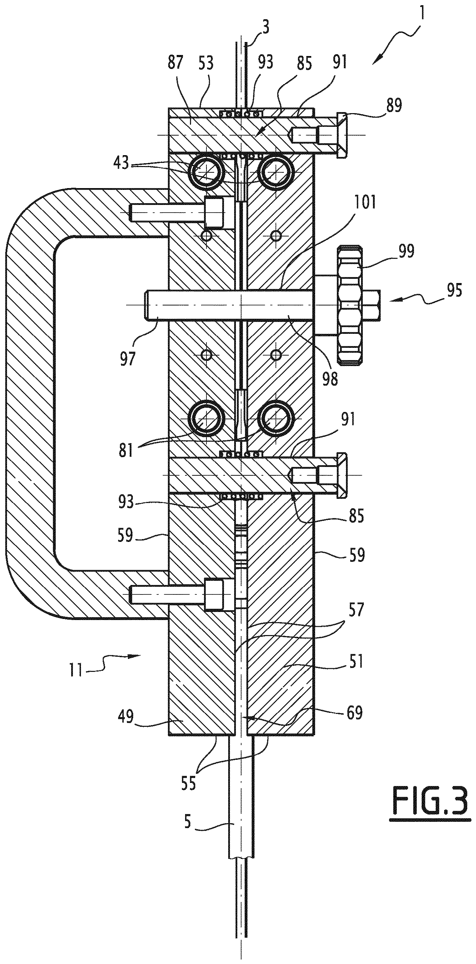

- la figure 3 est une vue en coupe de l'ensemble de la figure 1, considérée suivant l'incidence des flèches III de la figure 1 ;
- la figure 4 est une vue de dessus de l'ensemble de la figure 1 ; et
- les figures 5 et 6 sont des vues en perspectives de l'ensemble de la figure 1.

L'ensemble 1 représenté sur les figures est destiné à l'insertion d'un thermocouple 3 dans un conduit tubulaire 5. Il est destiné plus particulièrement à être utilisé dans une centrale nucléaire. En effet, les réacteurs nucléaires comportent généralement des colonnes d'instrumentation, équipées de thermocouples permettant de mesurer la température du liquide primaire à l'intérieur de la cuve du réacteur. Les conduits tubulaires destinés à recevoir ces thermocouples sont liés au couvercle de la cuve, et traversent ce couvercle. L'ouverture du conduit permettant l'introduction du thermocouple est située au-dessus du couvercle, à l'extérieur de la cuve.

Les thermocouples doivent être périodiquement remplacés. Pour ce faire, le thermocouple usé est extrait hors du conduit tubulaire 5, et un nouveau thermocouple 3 est introduit à l'intérieur du conduit tubulaire 5, par l'ouverture.

Cette opération est réalisée soit avec le couvercle en place sur la cuve, soit avec le couvercle démonté et les internes de cuve posés sur un stand en fond de piscine.

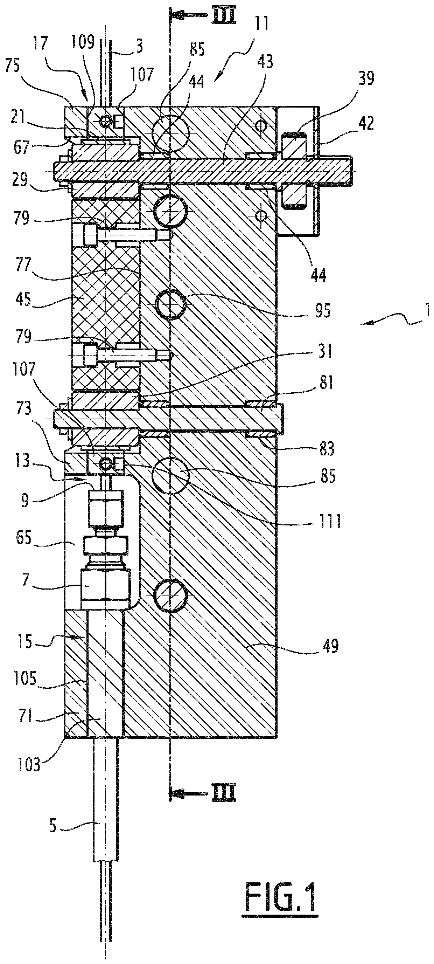

Comme visible notamment sur la figure 1, le conduit 5 porte à son extrémité un raccord 7, délimitant intérieurement l'ouverture 9 d'introduction du thermocouple 3 dans le conduit 5. Le conduit 5 et le raccord 7 sont en matériaux métalliques.

Le thermocouple 3 est un fil métallique de petit diamètre, par exemple réalisé en acier inoxydable, ayant un diamètre compris entre de l'ordre de 3mm.

L'ensemble 1 est prévu pour pousser le thermocouple 3 à l'intérieur du conduit tubulaire 5, à travers l'ouverture 9. Le thermocouple 3 présente une longueur importante, de plusieurs mètres.

Pour l'introduction du thermocouple, il est nécessaire de vaincre la résistance au glissement du thermocouple 3 à l'intérieur du conduit 5. Par ailleurs, quand le mouvement d'introduction du thermocouple 3 dans le conduit 5 est interrompu temporairement, il est nécessaire pour redémarrer le mouvement, de vaincre l'adhérence du thermocouple au conduit.

L'opération d'introduction du thermocouple 3 dans le conduit 5 est donc une opération délicate, qui doit de préférence être réalisée sans arrêt.

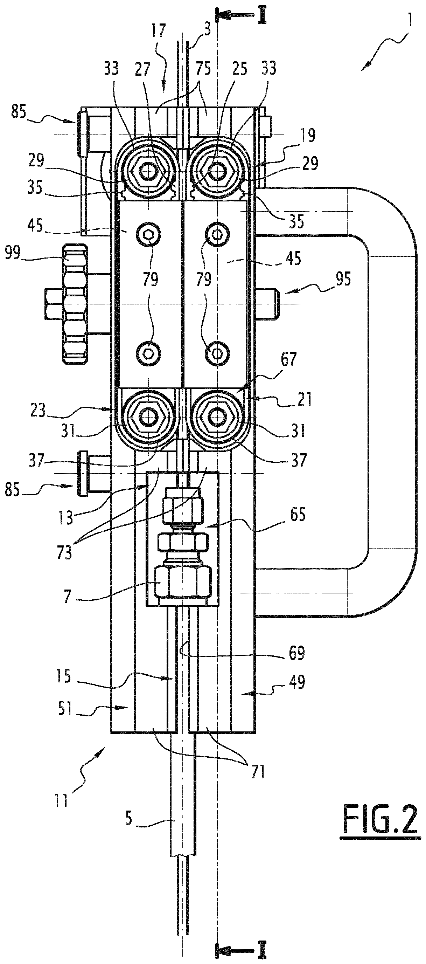

Comme visible notamment sur les figures 1 et 2, l'ensemble 1 comprend :
- un châssis 11, ayant un passage 13 longitudinal pour le thermocouple 3 ;
- un dispositif 15 de blocage du conduit 5 en position par rapport au châssis 11,
- un dispositif 17 de guidage du thermocouple le long du passage, jusqu'à l'ouverture 9 située à l'extrémité du conduit 5 ;
- un dispositif 19 d'entrainement du thermocouple 3 longitudinalement le long du passage 13 par rapport au châssis 11.

Le dispositif d'entrainement 19 comprend des première et seconde courroies d'entrainement 21 et 23, ayant respectivement des premier et second tronçons longitudinaux 25, 27 plaqués contre le thermocouple 3 (figure 2). Les premier et second tronçons 25, 27 sont disposés transversalement, de part et d'autre du thermocouple 3, et pincent transversalement le thermocouple 3 entre eux. La direction transversale est perpendiculaire à la direction longitudinale selon laquelle se déplace le thermocouple.

Par ailleurs, le dispositif d'entrainement 19 comporte un organe moteur, non représenté, entrainant les premier et second tronçons 25, 27 longitudinalement par rapport au châssis. Les premier et second tronçons 25, 27 exercent ensemble sur le thermocouple une force suffisante pour entrainer le thermocouple et l'insérer à l'intérieur du conduit 5. Cette force est suffisante pour vaincre non seulement la résistance au glissement du thermocouple 3 à l'intérieur de la gaine 5, mais également la force d'adhérence entre le thermocouple 3 et le conduit 5.

L'intensité de la force d'entrainement est fonction de plusieurs facteurs : la longueur longitudinale des tronçons 25 et 27, la nature du matériau constituant les courroies 21 et 23, la force avec laquelle les premier et second tronçons 25, 27 pincent entre eux le thermocouple 3.

Selon une variante non préférée, le dispositif d'entrainement ne comporte qu'une seule courroie d'entrainement, la seconde courroie d'entrainement étant remplacée par une surface de guidage fixe par rapport au châssis.

Comme visible notamment sur la figure 2, le dispositif d'entrainement comprend, pour chacune des première et seconde courroies 21, 23, une poulie motrice 29 et une poulie suiveuse 31 écartées longitudinalement l'une de l'autre. Chacune des poulies est montée rotative sur le châssis, autour d'un axe de rotation sensiblement perpendiculaire à la direction longitudinale et sensiblement perpendiculaire à la direction transversale.

Les première et seconde courroies 21, 23 sont chacune tendues autour de la poulie motrice et de la poulie suiveuse qui lui sont dédiées. Chacune des courroies circule autour de la poulie motrice et de la poulie suiveuse qui lui sont dédiées.

Ainsi, la première courroie 21, une fois montée autour des poulies, présente un tronçon arrondi 33 plaqué contre une surface externe de la poulie motrice 29, un tronçon longitudinal 35 s'étendant de la poulie motrice 29 à la poulie suiveuse 31 et tourné à l'opposé du thermocouple, un autre tronçon arrondi 37 s'enroulant autour d'une surface externe de la poulie suiveuse 31, le premier tronçon longitudinal 25 s'étendant entre la poulie motrice 29 et la poulie suiveuse 31 longitudinalement, et étant tourné vers le thermocouple. Comme visible sur la figure 2, la face interne de la première courroie 21 est crantée, de manière à coopérer avec des dents ménagées sur la surface externe de la poulie motrice 29 et de la poulie suiveuse 31.

La seconde courroie 23 est agencée de la même façon autour de la poulie motrice 29 et de la poulie suiveuse 31 qui lui sont propres.

Comme visible notamment sur la figure 1, le dispositif d'entrainement 19 comprend également un pignon pour chacune des première et seconde courroies 21, 23, et une chaîne cinématique d'entrainement de la poulie motrice 29 par le pignon. Les pignons associés aux première et seconde courroies sont référencés respectivement 39 et 41.

Dans l'exemple représenté, la chaîne cinématique est réduite à sa plus simple expression, et est un axe 43 rigidement fixé par une extrémité à la poulie motrice 29, et par son extrémité opposée au pignon 39, 41. L'axe 43 est monté rotatif sur le châssis 11 par le biais de paliers 45. Les pignons 39, 41 engrènent l'un avec l'autre. Par ailleurs, l'un des deux pignons est entrainé en rotation autour de l'axe 43 par l'organe moteur (non représenté).

Ainsi, les pignons 39 et 41 ont des sens de rotation inverses, de telle sorte que les poulies motrices 29 des deux courroies 21, 23 ont également des sens de rotation inverses. Du fait de l'agencement des premier et second tronçons 25, 27 de part et d'autre du thermocouple 3, les premier et second tronçons 25, 27 se déplacent donc longitudinalement dans le même sens.

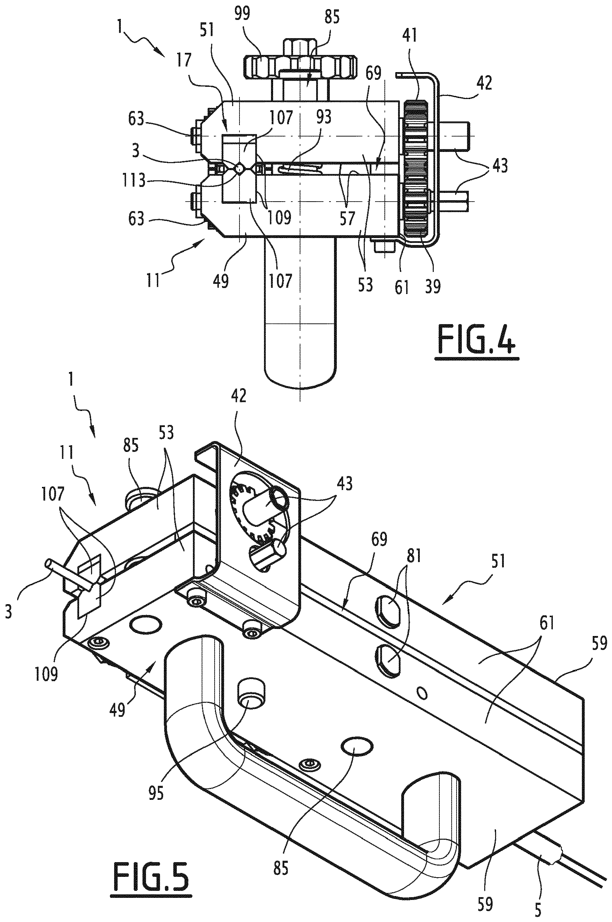

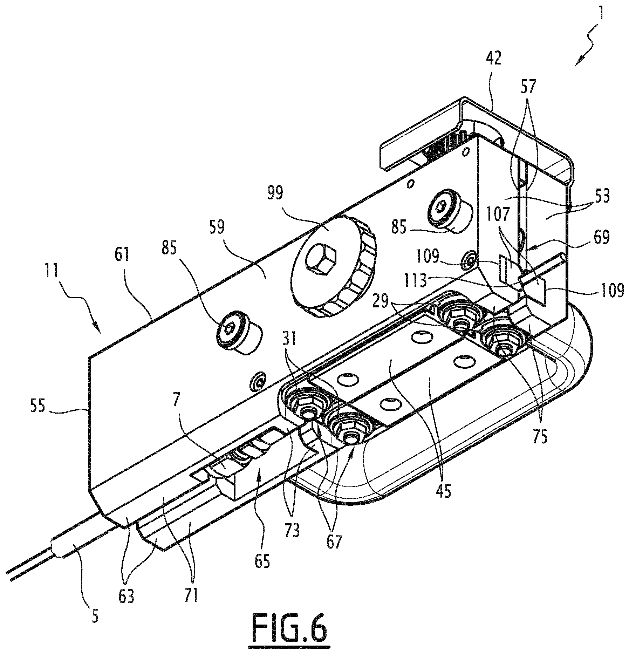

Comme le montrent les figures 5 et 6, les pignons 39 et 41 sont protégés par des capots 42.

Par ailleurs, comme visible sur la figure 1, le dispositif d'entrainement 19 comporte, pour chacune des première et seconde courroies 21, 23 un patin de courroie 45 disposé entre la poulie motrice 29 et la poulie suiveuse 31. Ce patin 45 occupe typiquement sensiblement tout l'espace longitudinalement d'une poulie à l'autre et transversalement du tronçon 35 au tronçon 25 ou 27. Il est ainsi agencé de manière à solliciter transversalement la première ou la seconde courroie 21, 23 contre le thermocouple 3, et plus précisément le premier ou le second tronçon longitudinal 25, 27 contre le thermocouple 3.

Ainsi, les premier et second tronçons 25, 27 sont plaqués sur toute leur longueur contre le thermocouple 3.

Ceci permet de répartir l'effort transversal exercé par les courroies sur une longueur importante du thermocouple 3, et contribue à l'absence de marquage du thermocouple.

Comme visible notamment sur les figures 4 à 7, le châssis 11 comprend deux demi-châssis 49, 51, portant respectivement les première et seconde courroies 21, 23.

Les deux demi-châssis 49, 51 sont déplaçables l'un par rapport à l'autre suivant la direction transversale, entre une position d'utilisation représentée sur les figures dans laquelle les première et seconde courroies 21, 23 pincent transversalement entre elles le thermocouple 3, et une position de repos (non représentée) dans laquelle les première et seconde courroies sont relativement plus écartées l'une de l'autre que dans la position d'utilisation et permettent la mise en place du thermocouple 3 entre les première et seconde courroies 21, 23.

Les demi-châssis 49, 51 sont des pièces massives, par exemple en aluminium.

Chacun des demi-châssis 49, 51 porte, outre la première ou la seconde courroie 21, 23, la poulie motrice 29 et la poulie suiveuse 31 correspondantes, le pignon 39 ou 41 d'entrainement de la poulie motrice, et la chaîne cinématique correspondante.

Comme visible notamment sur les figures 5 et 6, chaque demi-châssis présente une forme parallélépipédique. Chaque demi-châssis est délimité longitudinalement par des faces amont et aval 53, 55, transversalement par des grandes faces intérieure et extérieure 57, 59 et également par des faces supérieure et inférieure 61, 63. Les grandes faces intérieures des deux demi-châssis sont tournées l'une vers l'autre. Les grandes faces extérieures sont tournées à l'opposé de l'autre demi-châssis.

L'amont et l'aval s'entendent ici relativement au sens de déplacement du thermocouple quand celui-ci est inséré dans le conduit 5.

Chaque demi-châssis 49, 51 comporte deux logements 65, 67, respectivement pour recevoir le connecteur 7 et la première ou la seconde courroie 21, 23.

Les logements 65, 67 sont ouverts au niveau de la face inférieure 63 et au niveau de la grande face intérieure 57. En position d'utilisation, les logements 65 des deux demi-châssis communiquent l'un avec l'autre et sont placés transversalement l'un face à l'autre, et les logements 67 sont également placés l'un en face de l'autre et communiquent l'un avec l'autre.

Dans la position d'utilisation, les grandes faces intérieures respectives 57 des demi-châssis 49 et 51 sont disposés en vis-à-vis et son pratiquement en contact l'une avec l'autre, seul un interstice 69 de faible épaisseur subsistant entre les deux grandes faces. Au contraire, en position de repos, les grandes faces intérieures respectives 57 des demi-châssis 49 et 51 présentent transversalement entre elles un écartement de plusieurs millimètres, par exemple de l'ordre de 1 cm, de telle sorte qu'il est possible de glisser le conduit 5 ou le thermocouple 3 entre les grandes faces intérieures 57.

Comme visible notamment sur les figures 6 et 7, les demi-châssis 49 et 51 présentent sensiblement la même forme générale, et plus précisément sont symétriques l'un de l'autre par rapport au plan de contact entre les grandes faces intérieures 57.

Pour chacun des demi-châssis 49, 51, le logement 65 est situé longitudinalement vers l'aval par rapport au logement 67. Ainsi, le logement 65 est délimité vers la face aval par un massif 71, et est délimité vers l'amont par une cloison 73 qui le sépare du logement 67. Le logement 67 quant à lui est délimité vers l'aval par la cloison 73 et vers la face amont par une cloison 75.

Par ailleurs, comme visible sur la figure 1, la poulie motrice 29, la poulie suiveuse 31 et le patin de courroie 45 sont placés à l'intérieur du logement 67 du demi-châssis correspondant. Le patin de courroie 45 est rigidement fixé au fond 77 du logement par l'intermédiaire de vis 79. La poulie suiveuse 31 est montée rotative autour d'un axe 81, d'orientation sensiblement perpendiculaire à la direction longitudinale et à la direction transversale. L'axe 81 est monté sur le demi-châssis correspondant par l'intermédiaire de deux paliers 83.

On voit sur la figure 1 que le raccord 7 est disposé dans les logements 65, à cheval entre les deux demi-châssis 49 et 51. Il est en appui longitudinalement contre le massif 74.

L'ensemble 1 comprend en outre des organes de guidage 85, guidant les deux demi-châssis 49, 51 selon un mouvement de translation entre la position de repos et la position d'utilisation.

Dans l'exemple représenté, l'ensemble 1 comprend deux organes de guidage 85, d'orientation transversale. Les organes 85 comprennent chacun un axe lisse 87 et une butée 89. La butée est montée à une première extrémité axiale de l'axe 87. L'extrémité de l'axe 87 opposée à la butée 89 est rigidement fixée au demi-châssis 49. Par ailleurs, le demi-châssis 51 comporte un trou lisse 91 pour chacun des organes de guidage 85. L'axe 87 est engagé dans le trou lisse 91 et est libre de coulisser dans le trou lisse 91. La butée 89 limite le mouvement de translation du demi-châssis 51 quand celui-ci s'éloigne du demi-châssis 49.

Comme visible sur la figure 4, des ressorts hélicoïdaux de compression 93 sont montés autour de chacun des axes 87, et sont interposés entre les demi-châssis 49 et 51.

Les ressorts de compression 93 sollicitent les demi-châssis 49 et 51 dans le sens d'un écartement l'un par rapport à l'autre.

On voit également sur la figure 4 que l'ensemble 1 comprend un dispositif 95 de serrage, prévu pour solliciter les deux demi-châssis 49, 51 l'un vers l'autre en position d'utilisation. Ce dispositif comprend une tige 97 et un écrou moleté 99. La tige 97 présente une première partie d'extrémité rigidement fixée au demi-châssis 49. Elle présente par ailleurs une seconde partie d'extrémité 98, opposée à la première, portant un filetage externe, engagé à travers un trou lisse 101 ménagé dans le demi-châssis 51. L'écrou moleté 99 est monté sur l'extrémité de la partie 98 faisant saillie hors du trou lisse 101. L'écrou moleté 99 peut ainsi être vissé sur la partie 98 de l'axe, de manière à maintenir les demi-châssis 49, 51 en position d'utilisation, à l'encontre de la force de rappel des ressorts 93. La position de l'écrou moleté 99 ou son couple de serrage permet également d'ajuster la force de serrage avec laquelle les courroies 21, 23 pincent le thermocouple 3.

Le dispositif 15 de blocage du conduit 5 en position par rapport au châssis comprend deux patins de serrage 103, portés chacun par un demi-châssis 49, 51, adaptés pour pincer entre eux le conduit 5 en position d'utilisation des demi-châssis. En position de repos des demi-châssis 49, 51, les patins de serrage 103 sont écartés l'un de l'autre et libèrent le conduit 5 par rapport au châssis 11.

Chaque patin 103 est reçu dans un canal longitudinal 105, ménagé dans le massif 71 du demi-châssis correspondant. Le canal 105 est débouchant à ses deux extrémités, au niveau de la face aval 55 et au niveau du logement 65. Il est ouvert au niveau de la grande face intérieure 57. Chaque patin de serrage 103 porte une empreinte en creux longitudinale, de section adaptée pour recevoir le conduit 5.

Le dispositif 17 de guidage du thermocouple 3 le long du passage 13 comporte au moins deux patins de centrage 107 portés chacun par un demi-châssis 49, 51. Dans l'exemple représenté, le dispositif de guidage 17 comporte deux jeux de deux patins de centrage 107, chaque jeu comportant un patin 107 porté par le demi-châssis 49 et un autre patin 107 porté par le demi-châssis 51.

Le premier jeu de patin de centrage 107 est logé dans des encoches 109 ménagées dans les cloisons 75. Les encoches 109 sont ouvertes d'un côté vers la face amont, de l'autre côté vers le logement 67 et au niveau des grandes faces intérieures 57. Elles sont disposées l'une en face de l'autre.

L'autre jeu de patins de centrage 107 est logé dans des encoches 111, ménagés dans la cloison 73. Les encoches 111 sont débouchantes d'un côté dans le logement 65 et de l'autre dans le logement 67. Elles sont ouvertes au niveau de la grande face intérieure 57.

Les patins de centrage 107 d'un même jeu sont en appui l'un contre l'autre en position d'utilisation des demi-châssis, et délimitent entre eux un orifice de réception du thermocouple 3, référencé 113. L'orifice 113 présente, perpendiculairement à la direction longitudinale, une section légèrement plus grande que celle du thermocouple 3. Les orifices 113 des deux jeux de patin de centrage 107 sont dans le prolongement longitudinalement l'un de l'autre, et sont dans le prolongement du conduit 5.

Ainsi, le passage 13 comporte successivement les encoches 109, les logements 67, les encoches 111, et les logements 65.

Le procédé d'insertion du thermocouple 3 dans le conduit tubulaire 5 à l'aide du dispositif ci-dessus va maintenant être détaillé.

Ce procédé comprend principalement les étapes suivantes :
- placer les demi-châssis 49, 51 en position de repos ;
- mettre en place le thermocouple 3 et le conduit 5 par rapport aux demi-châssis 49, 51 ;
- placer les demi-châssis 49, 51 en position d'utilisation ;
- activer l'organe moteur de manière à entrainer le thermocouple 3.

Pour placer les demi-châssis 49, 51 en position de repos, l'écrou moleté 99 est entrainé en rotation autour de l'axe 97, dans un sens correspondant au dévissage. Sous l'effet de la force de rappel des organes élastiques 93, le demi-châssis 51 s'écarte du demi-châssis 49. Il est guidé par les organes de guidage 85, de telle sorte qu'il reste dans une orientation sensiblement parallèle à celle du demi-châssis 49.

La courroie 23 s'écarte de la courroie 21, du fait de ce mouvement.

Le thermocouple 3, à l'étape suivante, est mis en place dans le passage 13, et plus précisément, est mis en place entre les patins de centrage 107 logés dans les cloisons 75, entre les courroies 21 et 23 et entre les patins de centrage 107 logés dans les cloisons 73. Par ailleurs, le conduit 5 est placé entre les patins de serrage 105, le raccord 7 étant placé à l'intérieur du logement 65. L'ouverture 9 est disposée en vis-à-vis et dans le prolongement de l'orifice 113 délimité par les patins 107 de la cloison 73.

Pour placer les demi-châssis 49, 51 en position d'utilisation, un opérateur fait tourner la vis moleté 99 autour de l'axe 97, de manière à ramener les demi-châssis 49, 51 l'un contre l'autre. Au cours de ce mouvement, les demi-châssis sont guidés par les organes de guidage 85.

A la fin de ce mouvement, le conduit 5 est pincé transversalement entre les deux patins de serrage 103. Le thermocouple 3 est pincé entre les première et seconde courroies 21, 23. Il est également engagé dans les orifices 113 délimités par les deux jeux de patins de centrage 107.

L'opérateur active ensuite l'organe moteur, de manière à entrainer les premier et second pignons 39, 41 en rotation. Le sens de rotation est choisi de manière à entrainer le thermocouple 3 longitudinalement vers le conduit 5. Le thermocouple 3 est propulsé par les courroies 21, 23 et est guidé, notamment centré, par les patins de centrage 107.

La force exercée par les courroies est suffisante pour vaincre la résistance au glissement du thermocouple 3 à l'intérieur du conduit 5, et, en cas d'arrêt du mouvement, est suffisante pour vaincre la force d'adhérence du thermocouple 3 à l'intérieur du conduit 5.

La force d'entrainement est exercée par les courroies sur une longueur significative du thermocouple 3, de telle sorte que la force exercée par unité de longueur du thermocouple 3 est suffisamment faible pour ne pas provoquer de marquage de la surface du thermocouple 3.

L'organe moteur est réversible, au sens où il est susceptible d'entrainer en rotation les pignons 39, 41 aussi dans un sens provoquant l'extraction du thermocouple 3 hors du conduit 5. Ceci est particulièrement avantageux.

Par ailleurs, la mise en place du thermocouple 3 et du conduit 5 dans l'ensemble 1 est particulièrement commode, du fait de la construction de cet ensemble. Les organes de guidage 85 permettent notamment de guider le mouvement des demi-châssis et d'assurer une mise en place précise du thermocouple et du conduit dans les patins de serrage et entre les courroies.

Le dispositif de serrage permet d'ajuster la force de serrage avec laquelle les courroies pincent le thermocouple.

Les patins de centrage permettent de guider avec précision le thermocouple jusqu'à l'ouverture 9 du conduit.

L'ensemble 1 permet de réduire le temps nécessaire pour l'introduction d'un thermocouple dans un conduit de manière très significative. Avec l'ensemble de l'invention, le temps nécessaire pour insérer entièrement un thermocouple est de l'ordre de 1 mn. Dans l'état de la technique, avec un outillage à pince non motorisé, plusieurs minutes étaient nécessaires pour insérer entièrement un thermocouple.

Par ailleurs, un seul opérateur est nécessaire pour réaliser l'opération à l'aide de l'invention. Précédemment, deux opérateurs étaient nécessaires pour réaliser l'insertion du thermocouple à l'aide de l'outillage à pince non motorisé.

Dans le cas de l'insertion d'un thermocouple destiné à mesurer la température dans le coeur d'un réacteur nucléaire, les doses intégrées par les opérateurs sont considérablement réduites, à la fois du fait qu'un seul opérateur est nécessaire pour réaliser l'insertion, et du fait de la durée réduite pour l'insertion du thermocouple.

## Revendications

1. Ensemble (1) d'insertion d'un thermocouple (3) dans un conduit tubulaire (5), l'ensemble (1) comprenant :
- un châssis (11), ayant un passage (13) longitudinal pour le thermocouple (3);
- un dispositif (15) de blocage du conduit (5) en position par rapport au châssis (11) ;
- un dispositif (17) de guidage du thermocouple le long du passage (13) jusqu'à une ouverture (9) à l'extrémité du conduit (5) ;
- un dispositif (19) d'entraînement du thermocouple (3) longitudinalement le long du passage (13) par rapport au châssis (4) ;
**caractérisé en ce que** le dispositif d'entraînement (19) comprend au moins une première courroie d'entraînement (21) ayant un premier tronçon longitudinal (25) plaqué contre le thermocouple (3), et un organe moteur entraînant ledit premier tronçon (25) de la première courroie (21) longitudinalement par rapport au châssis (11).

2. Ensemble selon la revendication 1, **caractérisé en ce que** le dispositif d'entraînement (19) comprend une seconde courroie d'entraînement (23) ayant un second tronçon longitudinal (27) plaqué contre le thermocouple (3), l'organe moteur entraînant ledit second tronçon (27) de la seconde courroie (23) longitudinalement par rapport au châssis (11), les premier et second tronçons (25, 27) étant disposés transversalement de part et d'autre du thermocouple (13) et pinçant le thermocouple (3) entre eux.

3. Ensemble selon la revendication 2, **caractérisé en ce que** le dispositif d'entraînement (19) comprend pour chacune des première et seconde courroies (21, 23), une poulie motrice (29) et une poulie suiveuse (31) écartées longitudinalement l'une de l'autre, les première et seconde courroies (21, 23) étant chacune tendues autour des deux poulies (29, 31) correspondantes et circulant chacune autour des deux poulies (29, 31) correspondantes.

4. Ensemble selon la revendication 3, **caractérisé en ce que** le dispositif d'entraînement (19) comprend, pour chacune des première et seconde courroies (21, 23), un pignon (39, 41) et une chaîne cinématique d'entrainement de la poulie motrice (29) correspondante par le pignon (39, 41), les pignons (39, 41) engrenant l'un avec l'autre.

5. Ensemble selon la revendication 3 ou 4, **caractérisé en ce que** le dispositif d'entraînement (19) comprend, pour chacune des première et seconde courroies (21, 23), un patin de courroie (45) disposé entre la poulie motrice (29) et la poulie suiveuse (31), agencé de manière à solliciter transversalement la première ou la seconde courroie (21, 23) contre le thermocouple (3).

6. Ensemble selon l'une quelconque des revendications 2 à 5, **caractérisé en ce que** le châssis (11) comprend deux demi-châssis (49, 51) portant respectivement les première et seconde courroies (21, 23), les deux demi-châssis (49, 51) étant déplaçables l'un par rapport à l'autre transversalement, entre une position d'utilisation dans laquelle les première et seconde courroies (21, 23) pincent transversalement entre elles le thermocouple (3), et une position de repos dans laquelle les première et seconde courroies (21, 23) sont relativement plus écartées l'une de l'autre que dans la position d'utilisation et permettent la mise en place du thermocouple (3) entre les première et seconde courroies (21, 23).

7. Ensemble selon la revendication 6, **caractérisé en ce que** l'ensemble (1) comprend des organes de guidage (85), guidant les deux demi-châssis (49, 51) selon un mouvement de translation entre la position de repos et la position d'utilisation.

8. Ensemble selon la revendication 6 ou 7, **caractérisé en ce que** l'ensemble (1) comprend un dispositif de serrage (95) pour solliciter les deux demi-châssis (49, 51) l'un contre l'autre en position d'utilisation.

9. Ensemble selon l'une quelconque des revendications 6 à 8, **caractérisé en ce que** le dispositif de blocage (15) du conduit (5) en position par rapport au châssis (1) comprend deux patins de serrage (103) portés chacun par un demi-châssis (11), adaptés pour pincer entre eux le conduit (5) en position d'utilisation des demi-châssis (49, 51) et pour libérer le conduit (5) par rapport au châssis (11) en position de repos des demi-châssis (49, 51).

10. Ensemble selon l'une quelconque des revendications 6 à 9, **caractérisé en ce que** le dispositif de guidage (17) du thermocouple (3) le long du passage (13) comprend au moins deux patins de centrage (107) portés chacun par un demi-châssis (49, 51), adaptés pour centrer le thermocouple par rapport au passage (13) dans un plan perpendiculaire à la direction longitudinale en position d'utilisation des demi-châssis (49, 51) et pour permettre la mise en place du thermocouple (3) dans le passage (13) en position de repos des demi-châssis (49, 51).

11. Procédé d'insertion d'un thermocouple dans un conduit tubulaire à l'aide d'un ensemble selon l'une quelconque des revendications 6 à 10, le procédé comprenant les étapes suivantes :
- placer les demi-châssis (49, 51) en position de repos ;
- mettre en place le thermocouple (3) et le conduit (5) par rapport aux demi-châssis (49, 51) ;
- placer les demi-châssis (49, 51) en position d'utilisation ;
- activer l'organe moteur.

## Patentansprüche

1. Einrichtung (1) zum Einsetzen eines Thermoelements (3) in eine Rohrleitung (5), wobei die Einrichtung (1) aufweist:
- eine Fassung (11), die eine longitudinale Passage (13) für das Thermoelement (3) aufweist,
- eine Vorrichtung (15) zur Blockierung der Leitung (5) in Position relativ zu der Fassung (11),
- eine Vorrichtung (17) zum Führen des Thermoelements entlang der Passage (13) bis zu einer Öffnung (9) am Ende der Leitung (5),
- eine Vorrichtung (19) zum longitudinalen Antreiben des Thermoelements (3) entlang der Passage (13) relativ zu der Fassung (4),
**dadurch gekennzeichnet, dass** die Vorrichtung zum Antreiben (19) aufweist wenigstens einen ersten Antriebs-Riemen (21), der einen ersten longitudinalen Abschnitt (25) hat, der gegen das Thermoelement (3) gepresst ist, und ein Motororgan, das den besagten ersten Abschnitt (25) des ersten Riemens (21) relativ zu der Fassung (11) longitudinal antreibt.

2. Einrichtung gemäß Anspruch 1, **dadurch gekennzeichnet, dass** die Antriebs-Vorrichtung (19) aufweist einen zweiten Antriebs-Riemen (23), der einen zweiten longitudinalen Abschnitt (27) aufweist, der gegen das Thermoelement (3) gepresst ist, wobei das Motororgan den besagten zweiten Abschnitt (27) des zweiten Riemens (23) relativ zu der Fassung (11) longitudinal antreibt, wobei der erste und der zweite Abschnitt (25, 27) transversal beidseitig des Thermoelements (13) angeordnet sind und das Thermoelement (3) zwischen sich einklemmen.

3. Einrichtung gemäß Anspruch 2, **dadurch gekennzeichnet, dass** die Antriebs-Vorrichtung (19) für jeden von dem ersten und dem zweiten Riemen (21, 23) aufweist eine Antriebs-Riemenscheibe (29) und eine Nachfolge-Riemenscheibe (31), die longitudinal im Abstand zueinander sind, wobei der erste und der zweite Riemen (21, 23) jeweils um die beiden korrespondierenden Riemenscheiben (29, 31) herum gespannt sind und um die beiden korrespondierenden Riemenscheiben (29, 31) herum zirkulieren.

4. Einrichtung gemäß Anspruch 3, **dadurch gekennzeichnet, dass** die Antriebs-Vorrichtung (19) aufweist, für jeden von dem ersten und dem zweiten Riemen (21, 23), ein Zahnrad (39, 41) und einen Antriebsstrang zum Antreiben der korrespondierenden Antriebs-Riemenscheibe (29) durch das Zahnrad (39, 41), wobei die Zahnräder (39, 41) miteinander im Eingriff sind.

5. Einrichtung gemäß Anspruch 3 oder 4, **dadurch gekennzeichnet, dass** die Antriebs-Vorrichtung (19) aufweist, für jeden von dem ersten und dem zweiten Riemen (21, 23), einen Riemen-Führungsschuh (45), der zwischen der Antriebs-Riemenscheibe (29) und der Nachfolge-Riemenscheibe (31) angeordnet ist und der eingerichtet ist, um den ersten oder den zweiten Riemen (21, 23) transversal gegen das Thermoelement (3) zu drängen.

6. Einrichtung gemäß irgendeinem der Ansprüche 2 bis 5, **dadurch gekennzeichnet, dass** die Fassung (11) aufweist zwei Halb-Fassungen (49, 51), die respektive den ersten und den zweiten Riemen (21, 23) tragen, wobei die beiden Halb-Fassungen (49, 51) relativ zueinander transversal verlagerbar sind zwischen einer Einsatzposition, in welcher der erste und der zweite Riemen (21, 23) das Thermoelement (3) zwischen sich einklemmen, und einer Ruheposition, in welcher der erste und der zweite Riemen (21, 23) relativ zueinander weiter im Abstand sind als in der Einsatzposition und es dem Thermoelement (3) erlauben, zwischen dem ersten und dem zweiten Riemen (21, 23) platziert zu werden.

7. Einrichtung gemäß Anspruch 6, **dadurch gekennzeichnet, dass** die Einrichtung (1) aufweist Führungsorgane (85), die die beiden Halb-Fassungen (49, 51) führen gemäß einer Translationsbewegung zwischen der Ruheposition und der Einsatzposition.

8. Einrichtung gemäß Anspruch 6 oder 7, **dadurch gekennzeichnet, dass** die Einrichtung (1) aufweist eine Klemmvorrichtung (95) zum gegeneinander Drängen der beiden Halb-Fassungen (49, 51) in der Einsatzposition.

9. Einrichtung gemäß irgendeinem der Ansprüche 6 bis 8, **dadurch gekennzeichnet, dass** die Vorrichtung zur Blockierung (15) der Leitung (5) in Position relativ zu der Fassung (1) aufweist zwei Klemmschuhe (103), die jeweils von einer Halb-Fassung (11) getragen werden und die angepasst sind, um die Leitung (5) in der Einsatzposition der Halb-Fassungen (49, 51) zwischen sich einzuklemmen und um die Leitung (5) in der Ruheposition der Halb-Fassungen (49, 51) relativ zu der Fassung (11) freizugeben.

10. Einrichtung gemäß irgendeinem der Ansprüche 6 bis 9, **dadurch gekennzeichnet, dass** die Vorrichtung zum Führen (17) des Thermoelements (3) entlang der Passage (13) aufweist wenigstens zwei Zentrierschuhe (107), die jeweils von einer Halb-Fassung (49, 51) getragen werden und die angepasst sind, um das Thermoelements in der Einsatzposition der Halb-Fassungen (49, 51) relativ zu der Passage (13) in einer Ebene senkrecht zu der longitudinalen Richtung zu zentrieren und um in der Ruheposition der Halb-Fassungen (49, 51) zu erlauben, das Thermoelement (3) in der Passage (13) zu platzieren.

11. Verfahren zum Einsetzen eines Thermoelements in eine Rohrleitung mit Hilfe einer Einrichtung gemäß irgendeinem der Ansprüche 6 bis 10, wobei das Verfahren die folgenden Schritte aufweist:
- Platzieren der Halb-Fassungen (49, 51) in Ruheposition,
- Positionieren des Thermoelements (3) und des Rohrs (5) relativ zu den Halb-Fassungen (49, 51),
- Platzieren der Halb-Fassungen (49, 51) in Einsatzposition,
- Aktiveren des Antriebsorgans.

## Claims

1. An assembly (1) for the insertion of a thermocouple (3) into a tubular pipe (5), the assembly (1) comprising:
- a frame (11), having a longitudinal passage (13) for the thermocouple (3);
- a device (15) for blocking the pipe (5) in position relative to the frame (11);
- a device (17) for guiding the thermocouple along the passage (13) to an opening (9) at the end of the pipe (5);
- a device (19) for driving the thermocouple (3) longitudinally along the passage (13) relative to the frame (4);
**characterized in that** the driving device (19) comprises at least a first drive belt (21) having a first longitudinal segment (25) pressed against the thermocouple (3), and a motor member driving said first segment (25) of the first belt (21) longitudinally relative to the frame (11).

2. The assembly according to claim 1, **characterized in that** the driving device (19) comprises a second drive belt (23) having a second longitudinal segment (27) pressed against the thermocouple (3), the motor member driving said second segment (27) of the second belt (23) longitudinally relative to the frame (11), the first and second segments (25, 27) being arranged transversely on either side of the thermocouple (13) and pinching the thermocouple (3) between them.

3. The assembly according to claim 2, **characterized in that** the driving device (19) comprises, for each of the first and second belts (21, 23), a driving pulley (29) and a follower pulley (31) longitudinally separated from one another, the first and second belts (21, 23) each being stretched around two corresponding pulleys (29, 31) and each circulating around two corresponding pulleys (29, 31).

4. The assembly according to claim 3, **characterized in that** the driving device (19) comprises, for each of the first and second belts (21, 23), a pinion (39, 41) and a kinematic drive chain of the corresponding drive pulley (29) by the pinion (39, 41), the pinions (39, 41) meshing with one another.

5. The assembly according to claim 3 or 4, **characterized in that** the driving device (19) comprises, for each of the first and second belts (21, 23), a belt pad (45) arranged between the driving pulley (29) and the follower pulley (31), arranged so as to stress the first or second belt (21, 23) transversely against the thermocouple (3).

6. The assembly according to any one of claims 2 to 5, **characterized in that** the frame (11) comprises two half-frames (49, 51) respectively bearing the first and second belts (21, 23), the two half-frames (49, 51) being movable relative to one another transversely, between a usage position in which the first and second belts (21, 23) transversely pinch the thermocouple (3) between them, and an idle position in which the first and second belts (21, 23) are relatively more separated from one another than in the usage position and allow the placement of the thermocouple (3) between the first and second belts (21, 23).

7. The assembly according to claim 6, **characterized in that** the assembly (1) comprises guide members (85), guiding the two half-frames (49, 51) in a translational movement between the idle position and the usage position.

8. The assembly according to claim 6 or 7, **characterized in that** the assembly (1) comprises a gripping device (95) to stress the two half-frames (49, 51) against one another in the usage position.

9. The assembly according to any one of claims 6 to 8, **characterized in that** the device (15) for blocking the pipe (5) in position relative to the frame (1) comprises two gripping pads (103) each supported by a half-frame (11), suitable for pinching the pipe (5) between them in the usage position of the two half-frames (49, 51) and releasing the pipe (5) relative to the frame (11) in the idle position of the half-frames (49, 51).

10. The assembly according to any one of claims 6 to 9, **characterized in that** the device (17) for guiding the thermocouple (3) along the passage comprises at least two centering pads (107) each supported by a half-frame (49, 51), suitable for centering the thermocouple relative to the passage (13) in a plane perpendicular to the longitudinal direction in the usage position of the half-frames (49, 51) and for allowing the thermocouple (3) to be placed in the passage (13) in the idle position of the half-frames (49,51).

11. A method for inserting a thermocouple in a tubular pipe using an assembly according to any one of claims 6 to 10, the method comprising the following steps:
- placing the half-frames (49, 51) in the idle position;
- placing the thermocouple (3) and the pipe (5) relative to the half-frames (49, 51);
- placing the half-frames (49, 51) in the usage position;
- activating the motor member.
